# EUROPEAN PATENT APPLICATION

(11) **EP 4 309 868 A1**
(43) Date of publication of application: **24.01.2024**
(21) Application number: 23186569.2
(22) Date of filing: 20.07.2023
(51) Int. Cl.: B29C 45/07, B29D 35/06

(54) **LINEAR MACHINE FOR INJECTION OF THERMOPLASTIC MATERIAL IN A SHOE UPPER**

(30) Priority: 20.07.2022 IT 202200015237
(71) Applicant: Dalla Guarda, Corrado, 36010 Zanè (VI) (IT)
(72) Inventor: Dalla Guarda, Corrado, 36010 Zanè (VI) (IT)
(74) Representative: Burchielli, Riccardo

(57) **Abstract**

The present invention concerns a linear machine for injection on shoe uppers made of plastic or thermoplastic material such as TPU comprising:
- a plurality of fixed stations (11, 12, 13, 14) each comprising a mould holder (1) adapted to support mould assemblies (4) fixed to the mould holder (1),
- one or more injectors (2) adapted to inject plastic or thermoplastic material into each of the mould assemblies (4) and fixed to a carriage (3) for transporting the injectors (2),
so that one or more injectors are frontally aligned in successive times to each of the fixed stations (11, 12, 13, 14) of the linear machine (100).

## Description

The present invention refers generically to a linear upper injection machine.

The invention falls within the technical field of injection machines for moulding on products and fabrics and in particular within the technical field of injection machines for the footwear sector.

In more detail, the invention concerns a linear upper injection machine which has improved characteristics during the design and manufacturing stages.

In particular, the upper injection machine according to the present invention allows injection with block mould assemblies wherein one or more injectors can be provided for each assembly.

This feature allows injection with a greater number of colours depending on the number of injectors chosen for each block.

According to the prior art, there are currently three categories of such machines diversified on the basis of their construction characteristics.

The first category is called static and includes multiple stations, each of which works independently from the others. This first category allows a good flexibility of use, a fair ease of use and a low cost, in particular for the moulds.

The second category is called rotary and, unlike the static one, with the same investment, it increases production and also requires less manpower.

Finally, the third category, called linear can be defined as a solution that includes the advantages of both previous categories.

This category of linear machines comprises a plurality of fixed stations, with mould holders, aligned facing at least two injectors placed side by side and integral with each other. These injectors are furthermore constrained to guides in order to be able to translate between the various stations.

Machines of this type are often used for manufacturing soles and for foamed materials and are convenient for a number of stations generally greater than three.

The linear injection machines according to the prior art have injectors which can inject a single mould holder at a time.

Another drawback is due to the fact that the guides for translation allow such movement within the size of the mould holders, resulting in a rather awkward and difficult frontal access to the injection heads, with a consequent increase in difficulty during maintenance operations.

Another drawback of the linear injection machines according to the prior art is due to the fact that, since there is only one injector per mould holder, it is not possible to work with more than one colour or material at the same time.

An aim of the present invention is, therefore, to overcome the drawbacks of the prior art mentioned above and, in particular, to produce a linear upper injection machine having improved characteristics that result in greater efficiency and ease of work.

In particular, it is an aim of the present invention to provide a linear upper injection machine which is composed of block mould assemblies.

Another aim of the present invention is to produce a linear upper injection machine with one or more injectors acting for each mould assembly.

Another objective of the present invention is to provide a linear upper injection machine which can be arranged for working with several colours or materials at the same time.

Another objective of the present invention is producing a linear upper injection machine which allows the injection of hardening thermoplastic materials.

Further aims and advantages of the present invention will become clearer from the following description, concerning a preferred embodiment of the linear upper injection machine, provided by way of non-limiting example, and from the annexed drawings, also provided merely by way of non-limiting preferred example, wherein:
- Figure 1 is a first perspective and schematic view of the linear upper injection machine, according to the present invention.
- Figure 2 is a second perspective and schematic view of the linear upper injection machine, according to the present invention.
- Figure 3 is a third perspective and schematic view of the linear upper injection machine, according to the present invention.
- Figure 4 is a schematic top view of the linear upper injection machine, according to the present invention.

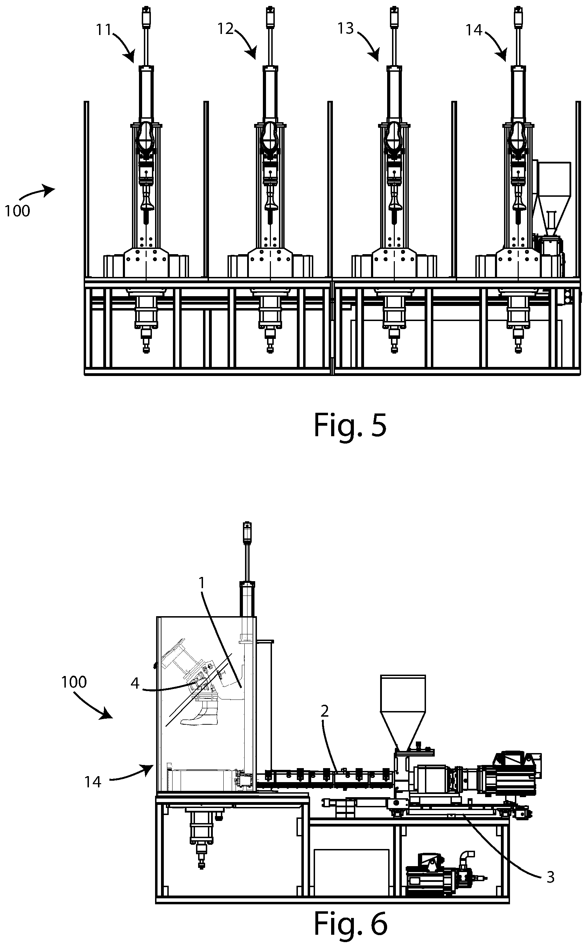

- Figure 5 is a schematic front view of the linear upper injection machine, according to the present invention.
- Figure 6 is a schematic side view of the linear upper injection machine, according to the present invention.

Referring to the figures shown above, the linear upper injection machine, in a first embodiment thereof, according to the present invention, is generically indicated by the reference number 100.

In particular, the machine 100, with reference to the previously mentioned figures, comprises, by way of example, four fixed stations 11, 12, 13 and 14, respectively.

Inside each of the stations 11, 12, 13, 14 there is a mould holder 1 adapted to support the mould assemblies 4 on which the injection must be carried out, during the processing stage.

In particular, the mould assemblies 4, fixed to the mould holder 1, contain at least one mould and are arranged to allow rotation of the moulds in order to speed up injection operations and reduce manual operations by personnel.

Advantageously, the mould assemblies 4 can be block mould assemblies with a variable number of blocks according to requirements.

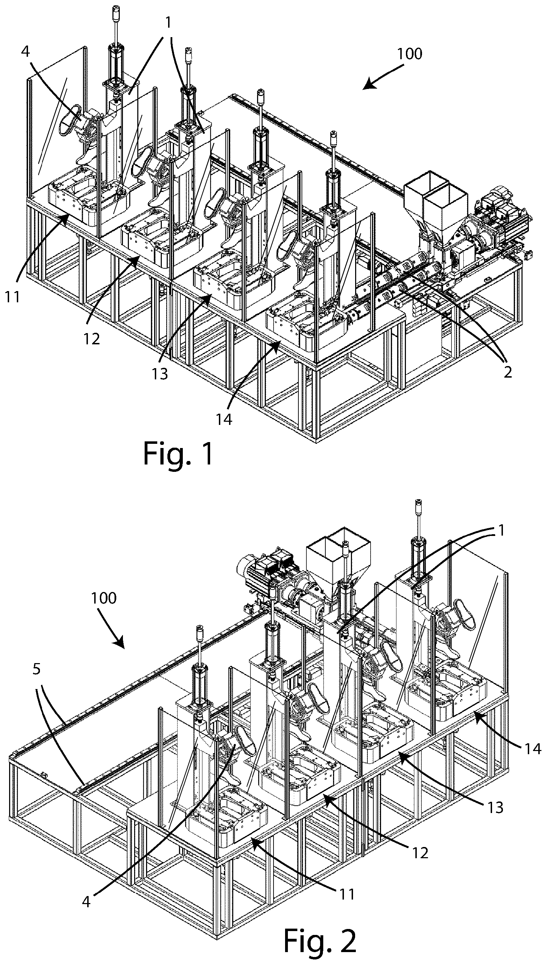

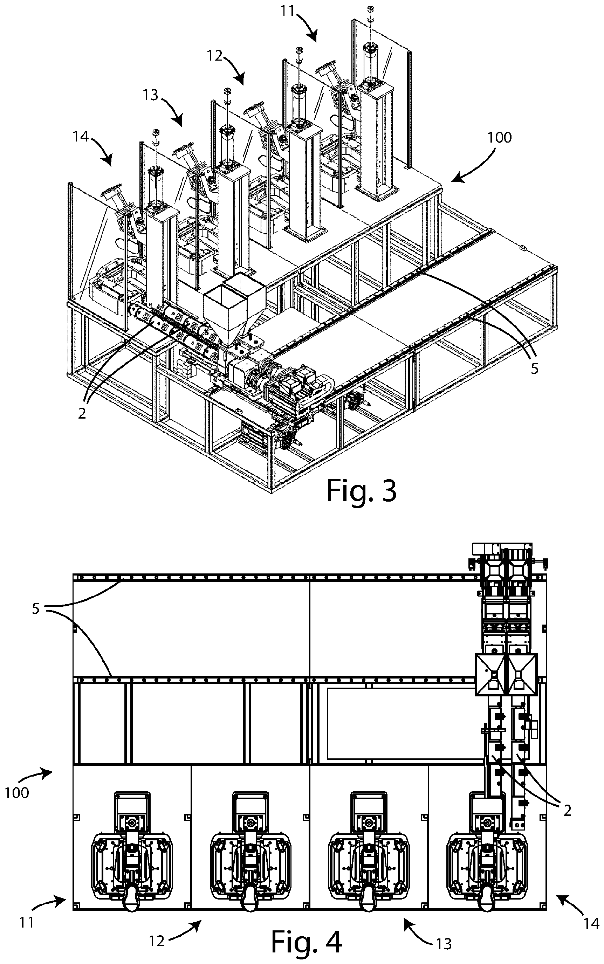

In a first embodiment, as can be seen in Figures 1-4, the stations 11, 12, 13 and 14 are aligned facing one or more injectors 2, which act on at least one of the stations 11, 12, 13, 14.

Advantageously, the injectors 2 can also be more than two in number.

The injectors 2 are mounted on a carriage 3 able to translate horizontally on at least two guides or rails 5 to allow the translation and the reaching of all the stations 11, 12, 13, 14.

Advantageously, the rails 5 are arranged above a support frame connected to the frame of the injection machine 100.

Furthermore, still advantageously, the rails 5 can comprise locking or braking systems to reduce speed and correctly position the carriage 3 in the desired position, allowing the injectors 2 to inject in the right point.

Advantageously, in a first embodiment, the injectors 2 are arranged, almost parallel to each other, to allow a simultaneous injection on the same station so as to allow the simultaneous injection of at least two materials and/or colours.

Even more advantageously, the injectors 2 can be arranged for injection on two or more adjacent stations so as to guarantee the serial injection of different parts, even of the same product.

In particular, a first injector 2 in the station 11 can carry out an injection in a particular point of an object being processed, while a second injector 2 can carry out the injection in a further point of the same object.

This feature is very useful for all serial productions as it makes it possible to significantly save time; in particular, according to the invention, it is possible to directly produce a complete shoe by being able to simultaneously carry out injections on the sole and upper of the shoe and take the finished shoe out of the machine.

Furthermore, the injectors 2 can be constrained to the carriage 3 so as to be able to reach and carry out injection operations at any point of the stations 11, 12, 13, 14.

In detail, the injectors 2 can be constrained and adjusted variably by modifying the horizontal or vertical spacing of the injectors 2 themselves.

Advantageously, the carriage 3 can be designed to allow the injectors 2 to be housed in a plurality of configurations, including interchangeable ones, chosen by the operator according to the usage needs.

Again advantageously, rails 5 and injectors 2 are designed to allow the injectors 2 to be transported even when they are not in a processing stage, without any obstruction or hindrance for the stations 11, 12, 13, 14, the mould holders 1 or the objects being processed.

In particular, the injectors 2 can be arranged to allow translation into an easily accessible area to allow maintenance and cleaning operations of the injection heads.

Such injection heads are installed at one end of the injectors 2 and allow the material to be injected to flow correctly from the injectors 2 themselves.

Advantageously, the injection heads 2 can be interchangeable and/or have openings which can be adjusted in width according to the desired type of injection.

Optionally, the translation of the carriage 3 on the rails 5 can take place manually, by means of a motor or by means of any other movement system.

Advantageously, to save space, the motor can be arranged below the support of the rails 5 and fixed to the frame of the machine 100.

Therefore, in an extremely advantageous way, the linear upper injection machine 100, which is the object of the present invention, comprises block mould assemblies 4, on which one or more injectors 2 can be brought during processing.

The linear injection machine 100 according to the invention allows in particular the injection on the upper or on any other suitable material (a plastic or thermoplastic material) and of different types, such as for example a hardening thermoplastic material.

In particular, the linear injection machine 100 allows the injection of high resistance materials, such as TPU or rubbers, and low resistance materials, such as PU materials.

Advantageously, the machine 100 according to the invention allows the injection and moulding of emblems, logos and other operations on finished products or products being processed.

In particular, the machine 100 according to the invention is capable of injecting any type of colour or material even at high pressure.

Advantageously, all this means that a single operator is able to activate and operate a series of multiple stations 11, 12, 13, 14 of the machine 100, carrying out all the work, cleaning and maintenance operations of all the aforementioned stations without the help of additional personnel.

From the description made, therefore, the characteristics of the linear upper injection machine, object of the present invention, are clear, as are the advantages thereof.

In particular, the machine according to the invention allows the injection on different mould holders and stations in any position and also with the simultaneous injection of several materials and/or colours.

Finally, it is clear that many other variations can be made to the machine in question, without thereby departing from the novelty principles inherent in the inventive idea, just as it is clear that, in the practical implementation of the invention, the materials, shapes and the sizes of the details illustrated may be any according to the requirements and they may be replaced with other equivalent ones.

Where the constructive features and techniques mentioned in the attached claims are followed by reference signs or numbers, such reference signs have been introduced with the sole aim of increasing the intelligibility of the claims themselves and, consequently, they do not have any limiting effect on the interpretation of each element identified, merely by way of example, by such reference signs.

## Claims

1. A linear machine for injection on shoe uppers made of plastic or thermoplastic material such as TPU comprising:
- a plurality of fixed stations (11, 12, 13, 14) each comprising a mould holder (1) adapted to support mould assemblies (4) fixed to said mould holder (1),
- one or more injectors (2) adapted to inject plastic or thermoplastic material into each of said mould assemblies (4) and fixed to a carriage (3) for transporting said one or more injectors (2),
so that said one or more injectors (2) are frontally aligned at successive times to each of said fixed stations (11, 12, 13, 14) of said linear machine (100).

2. The linear upper injection machine according to the preceding claim **characterised in that** for each mould assembly (4) at least one pair of injectors (2) acts, allowing the injection of more than one plastic or thermoplastic material and/or different colours on one or more of said stations (11, 12, 13, 14).

3. The linear upper injection machine according to one of the preceding claims **characterised in that** said mould assemblies (4) are of the block type.

4. The linear upper injection machine according to one of the preceding claims **characterised in that** said carriage (3) allows the translation of said one or more injectors (2) along guides or rails (5) so that said one or more injectors (2) are positioned frontally to each of said stations (11, 12, 13, 14).

5. The linear upper injection machine according to one of the preceding claims **characterised in that** said guides (5) include locking or braking systems to reduce speed and correctly position said carriage (3).

6. The linear upper injection machine according to one of the preceding claims **characterised in that** said one or more injectors (2) are configured to inject said plastic or thermoplastic material on two or more adjacent stations allowing the serial injection of different parts of the same product.

7. The linear upper injection machine according to claim 2 **characterised in that** said pair of injectors (2) has a variable horizontal and/or vertical spacing so as to reach various positions of adjacent stations (11, 12, 13, 14).

8. The linear upper injection machine according to one of the preceding claims **characterised in that** said one or more injectors (2) include interchangeable and/or adjustable injection heads arranged on one end of each injector (2).
